# EUROPÄISCHE PATENTSCHRIFT

(11) **EP 2 681 080 B1**
(45) Veröffentlichungstag und Bekanntmachung des Hinweises auf die Patenterteilung: **25.02.2015**
(21) Anmeldenummer: 12707242.9
(22) Anmeldetag: 02.03.2012
(51) Int. Cl.: B60R 11/00, B60H 1/00, B60J 7/11, F24F 13/32

(54) **BEFESTIGUNGSVORRICHTUNG ZUM BEFESTIGEN EINER FUNKTIONSEINRICHTUNG AN DER WAND EINES FREIZEITFAHRZEUGS**
FASTENING APPARATUS FOR FASTENING A FUNCTIONAL DEVICE TO THE WALL OF A RECREATION VEHICLE
DISPOSITIF DE FIXATION DESTINÉ À FIXER UN DISPOSITIF FONCTIONNEL SUR LA PAROI D'UN VÉHICULE DE LOISIRS

(30) Priorität: 04.03.2011 DE 202011003575 U
(43) Veröffentlichungstag der Anmeldung: 08.01.2014
(73) Patentinhaber: Truma Gerätetechnik GmbH & Co. KG, 85640 Putzbrunn (DE)
(72) Erfinder: HÄRTIG, Sebastian, 80636 München (DE); HILLER, Werner, 85661 Forstinning (DE); VENSCHOTT, Mathias, 81825 München (DE); GROSS, Ekkehard, 85661 Forstinning (DE)
(74) Vertreter: Prinz & Partner mbB
(86) Internationale Anmeldenummer: PCT/EP2012/000959
(87) Internationale Veröffentlichungsnummer: WO 2012/119743

(56) Entgegenhaltungen:
- WO-A1-91/19617
- DE-A1- 19 716 552
- DE-A1- 19 744 717
- US-A- 2 869 333
- US-A- 4 193 339

## Beschreibung

Die Erfindung betrifft eine Befestigungsvorrichtung zum Befestigen einer Funktionseinrichtung an einen Durchbruch in einer Wandeinrichtung eines Freizeitfahrzeugs.

Es ist bekannt, bei Freizeitfahrzeugen wie Wohnwagen oder Reisemobilen Dachklimageräte auf dem Dach des Freizeitmobils zu montieren. Dabei wird häufig der für eine Dachluke vorhandene Ausschnitt im Fahrzeugdach des Freizeitfahrzeugs genutzt, wobei anstelle der Dachluke das Dachklimagerät aufgesetzt wird. Zur Abdichtung zwischen der Klimageräteunterseite und der Dachkonstruktionsoberseite ist üblicherweise eine Quetsch- oder Lippendichtung vorgesehen. Die Dichtwirkung wird durch die feste Montage des Dachklimageräts auf dem Dachlukenausschnitt erreicht.

Jedoch hat es sich herausgestellt, dass bei größeren Dachunebenheiten oder bei Dichtmittelrückständen von ehemals eingebauten Dachluken eine wirksame Abdichtung häufig kaum realisierbar ist. In diesem Fall wird meist versucht, mit zusätzlicher Dichtmasse eventuell vorhandene Spalten und Unebenheiten aufzufüllen, um eine ausreichende Dichtwirkung zu erzielen.

Vor allem dann, wenn eine bereits vorhandene Dachluke bzw. der bereits vorhandene Ausschnitt für eine derartige Dachluke genutzt werden soll, um ein Dachklimagerät zu montieren, besteht oft das Problem, dass für die Befestigungsschrauben der Dachluke Bohrungen oder Ausfräsungen in das Wohnwagendach eingebracht wurden, die weit über die übliche, meist rechteckige oder quadratische Kontur von zum Beispiel 400 mm x 400 mm herausragen. Das bedeutet, dass der im Prinzip quadratische oder rechteckige Querschnitt der Öffnung an verschiedenen Stellen durch Bohrungen oder Ausfräsungen weiter nach außen vergrößert sein kann. Wird in einem solchen Fall ein Dachklimagerät mit Dichtlippe aufgebracht, besteht die Gefahr, dass die Dichtlippe über die Ausfräsungen oder Bohrungen verläuft, sodass in diesen Bereichen keine Dichtwirkung mehr besteht. Der Verlauf der Dichtlippe orientiert sich dabei üblicherweise an der Annahme, dass der Dachlukenausschnitt gleichmäßig, also quadratisch oder rechteckig ist, sodass eventuelle Ausfräsungen oder Bohrungen nicht berücksichtigt werden. In einem solchen Fall werden die ausgefrästen Ecken mit Dichtmasse ausgefüllt, um dennoch eine Dichtwirkung zu erreichen. Dies ist zum einen mühsam und erfordert besondere Sorgfalt, zum anderen kann aber auch die dauerhafte Dichtwirkung bei Temperaturwechseln und Sonneneinstrahlung nicht garantiert werden. Häufig wird zusätzlich zu den oben beschriebenen Maßnahmen auf die Berührungsfläche zwischen dem Dachklimagerät und dem Fahrzeugdach ein weiteres Dichtmittel, zum Beispiel Sikaflex®, aufgetragen und damit die Anlage auf das Dach geklebt. In diesem Fall ist eine einfache Demontage des Klimageräts nicht mehr möglich.

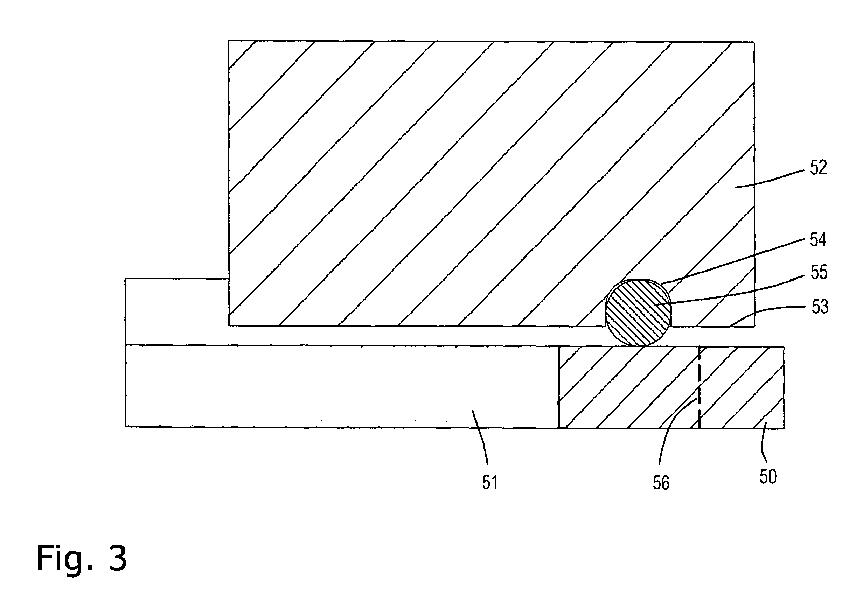

Fig. 3 zeigt schematisch einen derartigen Aufbau.

Ein Dach 50 eines Frelzeitfahrzeugs, also zum Beispiel eines Reisemobils, weist einen Dachausschnitt mit einem Durchbruch 51 auf. In diesem Durchbruch 51 war vormals eine jetzt nicht mehr dargestellte Dachluke eingesetzt, die jedoch entfernt wurde, um ein Dachklimagerät 52 aufzusetzen.

Das Dachklimagerät 52 wird mit Hilfe nicht gezeigter Befestigungsmittel auf dem Dach 50 gehalten. Um eine Abdichtung in der Trennfuge zwischen dem Dachklimagerät 52 und dem Dach 50 zu erreichen, ist in einer Befestigungsfläche 53 eine umlaufende Nut 54 ausgebildet, in die eine Runddichtung 55 eingelegt ist. Die Runddichtung 55 kann zum Beispiel einen geschlossenen Ring bilden, was jedoch aufgrund ihrer schematischen Darstellung in Fig. 3 nicht erkennbar ist. Jedoch kann in der Fig. 3 deutlich erkannt werden, dass die Runddichtung 55 unmittelbar auf dem Dach 50 aufliegt, um die gewünschte Dichtwirkung zu erzeugen.

Wenn der Durchbruch 51 eine Außenköntur aufweist, die stets innerhalb der Runddichtung 55 verläuft, kann so eine zufriedenstellende Dichtwirkung erreicht werden. vorausgesetzt, dass die Oberfläche des Dachs 50 nicht durch Unebenheiten oder Verunreinigungen beeinträchtigt ist.

Jedoch ist es aus der Praxis bekannt, dass die Ausschnitte für den Durchbruch 51 auch unregelmäßig sein können und sich an einigen Stellen teilweise deutlich nach außen hin am Umfang des Durchbruchs 51 vergrößern. Eine solche radiale Vergrößerung (in Fig. 3 nach rechts) ist durch die gestrichelte Linie 56 angedeutet. An dieser Stelle weist der Durchbruch 51 eine tiefer in die Wandung des Dachs 50 hineinragende Ausnehmung auf, die so weit geht, dass die Runddichtung 55 nicht mehr die Oberfläche des Dachs 50 berühren kann. Damit besteht in diesem Bereich keine Dichtwirkung mehr, was zu den oben beschriebenen Problemen führt.

Aus der DE 197 44 717 A1 ist eine Dachaufbau-Einrichtung bekannt, die ein Ober- und Unterteil aufweist, die fest miteinander verbunden sind, wobei das Unterteil an das Dachprofil des entsprechenden Autos angepasst ist, um Unebenheiten des Fahrzeugdachs auszugleichen.

Aus der gattungsbildenden DE 197 16 552 A1 ist eine Befestigungsvorrichtung zum Befestigen einer Funktionseinrichtung an einem Durchbruch in einer Wandeinrichtung eines Fahrzeugs bekannt, die mit einer Anschlussfläche mittels einer Schraube fest verbunden ist. Die Schraube wird dabei durch eine Öffnung in der Anschlussfläche und in der Aufbaueinrichtung eingesetzt.

Der Erfindung liegt die Aufgabe zugrunde, eine Befestigungsmöglichkeit anzugeben, mit der eine Funktionseinrichtung, zum Beispiel ein Dachklimagerät, an einem Durchbruch bzw. Ausschnitt in der Wandung eines Freizeitfahrzeugs zuverlässig befestigt werden kann, wobei die oben beschriebenen Dichtigkeitsprobleme vermieden werden sollen.

Die Aufgabe wird erfindungsgemäß durch eine Befestigungsvorrichtung mit den Merkmalen von Anspruch 1 gelöst. Vorteilhafte Weiterentwicklungen sind in den abhängigen Ansprüchen angegeben.

Es wird eine Befestigungsvorrichtung zum Befestigen einer Funktionseinrichtung an einem Durchbruch in einer Wandeinrichtung eines Freizeitfahrzeugs angegeben, wobei die Funktionseinrichtung einen Befestigungsflansch aufweist, zwischen dem Befestigungsflansch der Funktionseinrichtung und der Wandeinrichtung eine Adaptereinrichtung vorgesehen ist, zwischen der Adaptereinrichtung und einem den Durchbruch umgebenden Teilbereich einer Außen- oder Innenfläche der Wandeinrichtung eine Wanddichtfläche ausgebildet ist, und wobei zwischen der Adaptereinrichtung und dem Befestigungsflansch eine Befestigungsdichtfläche ausgebildet ist.

Die Funktionseinrichtung kann insbesondere ausgewählt sein aus der Gruppe Klimagerät, Gebläseeinrichtung, Heizeinrichtung, Außenantenne, Satellitenantenne, Windrad, Solaranlage, Lüftungseinrichtung (z.B. auch Lüftungsgitter), Wasservorratsbehälter, Sanitäreinrichtung, Duscheinrichtung, Toiletteneinrichtung, Kühlschrank, Kocheinrichtung, Staubbehälter, Möbeleinrichtung oder Wandelement.

Als Wandeinrichtung eignen sich alle Wände eines Freizeitfahrzeugs, nämlich insbesondere eine Seitenwand, das Fahrzeugdach oder der Fahrzeugboden. Als Wandeinrichtung können aber auch eine Tür, ein Fenster, Dachfenster, Innenwände, Innentüren oder Flächen von Inneneinrichtungen (Möbel) geeignet sein. Unter einem Freizeitfahrzeug sind insbesondere Reisemobile oder Wohnwagen zu verstehen.

Mit Hilfe der Adaptereinrichtung ist es möglich, eine zuverlässige Verbindung zwischen der Wandeinrichtung und der Funktionseinrichtung zu schaffen. So kann die Adaptereinrichtung fest in oder an dem Durchbruch, zum Beispiel einem Ausschnitt für eine Dachluke, in der Wandeinrichtung (in dem genannten Beispiel: das Fahrzeugdach) befestigt werden. Die Befestigung kann in geeigneter Weise durchgeführt werden, wobei insbesondere sicherzustellen ist, dass zwischen der Adaptereinrichtung und der entsprechenden zugehörigen Außen- oder Innenfläche der Wandeinrichtung die Wanddichtfläche besteht. Die Wanddichtfläche ist in geeigneter Weise abzudichten, zum Beispiel mit Hilfe eines aufzutragenden Dichtmittels.

Auf diese Weise wird die Adaptereinrichtung in dem Durchbruch befestigt, wobei zwischen der Adaptereinrichtung und der Wandeinrichtung die gewünschte Dichtwirkung erzielt wird.

Zudem kann die Adaptereinrichtung zur Versteifung und damit zur Stabilisierung des Durchbruchs bzw. des Ausschnitts in der Wandeinrichtung dienen, da die Adaptereinrichtung eine hohe Eigenstabilität und Steifigkeit aufweisen kann, die in der Regel höher sein dürfte als die Stabilität der Wandeinrichtung. Hierbei ist zu beachten, dass typische Fahrzeugwände und -dächer meist nur aus einem dünnen Blech oder zwei Blechen mit dazwischen eingebrachtem Wärmedämmungsmaterial bestehen. Die Eigenstabilität der Bleche ist naturgemäß äußerst gering. Auch das dazwischen vorgesehene Dämmmaterial ist kaum geeignet, eine hohe Festigkeit zu erreichen. Die Adaptereinrichtung als Rahmenteil hingegen kann zu einer deutlichen Stabilisierung führen, was insbesondere auch vorteilhaft ist, wenn an der Adaptereinrichtung die Funktionseinrichtung, zum Beispiel ein schweres Klimagerät, angebracht werden soll.

Dementsprechend ist auch zwischen der Adaptereinrichtung und dem Befestigungsflansch die Befestigungsdichtfläche vorgesehen, also eine Berührfläche zwischen der Adaptereinrichtung und dem Befestigungsflansch der Funktionseinrichtung, die ebenfalls in geeigneter Weise abgedichtet werden muss. Dies kann einerseits mit Hilfe eines zusätzlichen Dichtmittels erfolgen, andererseits aber auch konstruktiv durch entsprechende Ausgestaltung der Adaptereinrichtung und des Befestigungsflanschs erreicht werden, wie später noch erläutert wird.

Die Adaptereinrichtung stellt eine definierte Anschlussmöglichkeit für die Funktionseinrichtung dar, sodass jede beliebige Funktionseinrichtung an der Adaptereinrichtung befestigt werden kann, sofern nur die vorgegebenen, unter Umständen standardisierten Anschlussmaße eingehalten werden. Das beim Stand der Technik übliche und dort auch erforderliche "Basteln" bzw. "Flicken" mit Füll- oder Dichtmassen ist dann nicht mehr erforderlich.

Die Adaptereinrichtung weist ein Trägerelement, eine Durchbruchskopplung und eine Flanschkopplung auf. Somit sind in der Adaptereinrichtung wenigstens drei Funktionen vereint, nämlich jeweils entsprechende Kopplungsbereiche zum Koppeln der Adaptereinrichtung mit der Wandeinrichtung einerseits (Durchbruchskopplung) und der Funktionseinrichtung andererseits (Flanschkopplung für den Befestigungsflansch). Das Trägerelement dient zum Halten der Durchbruchskopplung und der Flanschkopplung.

Die Adaptereinrichtung ist einstückig ausgebildet. Auf diese Weise kann sie relativ einfach hergestellt und montiert werden, ohne dass bei der Montage mehrere Teile miteinander zusammengefügt werden müssen, was in der Regel auch wieder einigen Dichtaufwand erfordern würde.

Die Adaptereinrichtung ist ringförmig geschlossen ausgebildet und folgt dem Verlauf der Außenkontur des Durchbruchs. Die Adaptereinrichtung ist in diesem Fall rahmenförmig bzw. als Rahmenteil ausgebildet, das zum Beispiel in oder auf dem Durchbruch der Wandeinrichtung eingesetzt bzw. aufgesetzt werden kann. Dadurch, dass die Adaptereinrichtung dem Verlauf der Außenkontur des Durchbruchs folgt, müssen nicht unnötige Bereiche des Durchbruchs abgedeckt werden.

Die Adaptereinrichtung ist ringförmig geschlossen, wobei das Trägerelement eine ringförmig umlaufende flache Platte aufweist, die Durchbruchskopplung als auf dem Trägerelement umlaufende, sich senkrecht zu dem Trägerelement erstreckende Rippenstruktur ausgebildet ist, die Flanschkopplung als auf dem Trägerelement umlaufende, sich senkrecht zu dem Trägerelement erstreckende Rippenstruktur ausgebildet ist und wobei die Durchbruchskopplung und die Flanschkopplung auf gegenüberliegenden Seiten des Trägerelements ausgebildet sind.

Die ringförmige umlaufende flache Platte des Trägerelements kann auch als Platte verstanden werden, die in ihrem Inneren einen Ausschnitt aufweist, der im Wesentlichen der Kontur des Durchbruchs entspricht bzw. durchaus auch etwas kleiner sein kann. Von dieser Platte bzw. dem Trägerelement erstreckt sich senkrecht eine Rippenstruktur, die als Durchbruchskopplung dient und somit dazu genutzt werden kann, die Adaptereinrichtung am oder im Durchbruch der Wandeinrichtung zu befestigen.

Entsprechend ist ebenfalls auf dem Trägerelement, im Regelfall jedoch auf der anderen Seite, der Durchbruchskopplung gegenüberliegend die Flanschkopplung ausgebildet, die sich als ebenfalls senkrecht zu dem Trägerelement erstreckende Rippenstruktur erstreckt. Die Flanschkopplung mit ihrer Rippenstruktur dient wiederum zum Anbinden der Funktionseinrichtung.

Die Flanschkopplung kann eine Dichtkante aufweisen, die einen Teil der Befestigungsdichtfläche bildet und mit dem Befestigungsflansch der Funktionseinrichtung dichtend zusammenwirkt. Somit kann an der Flanschkopplung eine Dichtkante definiert sein, die in besonderer Weise dem Befestigungsflansch zugeordnet ist und eine ausreichende Dichtwirkung ermöglicht, ohne dass zusätzliche Dichtmittel vorgesehen sein müssen.

Der Befestigungsflansch kann aus einem elastischen Material bestehen, wobei die Dichtkante in den Befestigungsflansch eindringen und das elastische Material elastisch verformen kann. Durch die elastische Wirkung zwischen Dichtkante und Befestigungsflansch kann eine ausreichende Dichtwirkung erreicht werden.

Ebenso ist es möglich, dass die gesamte Flanschkopplung oder auch nur deren Dichtkante aus einem elastischen Material besteht. In diesem Fall kann der Befestigungsflansch auch starr sein, wobei dennoch eine dichte Verbindung zwischen dem Befestigungsflansch und der Dichtkante ermöglicht wird. Zur Herstellung der Flanschkopplung kann z. B. ein Zwei-Komponenten-Spritzgießverfahren genutzt werden, um das elastische Material mit dem starren Material der restlichen Adaptereinrichtung zu verbinden.

Bei einer Variante kann das Trägerelement mit der flachen Platte flach an der Wandeinrichtung anliegen. Insbesondere kann es dabei flächig mit der Außen- oder Innenfläche der Wandeinrichtung in Kontakt gebracht werden.

Die flache Platte kann - wie das Trägerelement - einen ringförmig geschlossenen Verlauf aufweisen, wobei sie durch den ringförmig geschlossenen Verlauf eine einen inneren Ausschnitt in der Platte umschließende Innenkontur und eine Außenkontur aufweist. Sie entspricht somit einem flachen, plattenförmigen Ring mit entsprechender Kontur, die - je nach Form des Durchbruchs - zum Beispiel rechteckig, quadratisch oder kreisförmig sein kann.

Eine radiale Breite der flachen Platte ist durch die Differenz zwischen der Innenkontur und der Außenkontur definiert, wobei die radiale Breite der flachen Platte wenigstens doppelt so groß ist, wie die Dicke der flachen Platte. Selbstverständlich kann die radiale Breite auch noch deutlich größer sein.

Insbesondere kann die radiale Breite so bemessen sein, dass sie ausreicht, um zum Beispiel Ausfräsungen oder Bohrungen abzudecken, die - wie oben im Zusammenhang mit dem Stand der Technik beschrieben - beim Einbau üblicher Dachluken erforderlich sein können, jedoch nach Ersatz der Dachluken durch ein Klimagerät zu Dichtigkeitsproblemen führen können.

Die radiale Breite der flachen Platte und damit des Trägerelements kann somit sehr großzügig bemessen sein, um einen flächigen Kontakt zwischen dem Trägerelement und der Außen- oder Innenfläche der Fahrzeugwand zu erreichen. Wenn in die flächige Verbindung zwischen dem Trägerelement und dem entsprechenden Teil der Wandeinrichtung ein Dichtmittel eingebracht wird, lässt sich eine zuverlässige Dichtwirkung erreichen.

Das Dichtmittel kann auch direkt auf der flachen Platte ausgebildet sein bzw. Teil der flachen Platte sein. So ist es möglich, zum Beispiel einen elastischen Wulst als Dichtmittel auf der flachen Platte aufzubringen. Der elastische Wulst kann mithilfe eines Zwei-Komponenten-Spritzgießverfahrens angespritzt werden.

Es kann eine Klemmeinrichtung vorgesehen sein, zum Halten bzw. Andrücken der Funktionseinrichtung gegen die Adaptereinrichtung und die Wandeinrichtung. Mit Hilfe der Klemmeinrichtung kann somit die Funktionseinrichtung an der Adaptereinrichtung und der Wandeinrichtung zuverlässig festgehalten werden. Beim Lösen der Klemmeinrichtung hingegen kann es leicht möglich sein, die Funktionseinrichtung abzunehmen und von der Adaptereinrichtung zu trennen. Die Adaptereinrichtung hingegen kann in der Wandeinrichtung verbleiben und - je nach Ausgestaltung - dauerhaft an der Wandeinrichtung befestigt sein. Letzteres ist insbesondere dann sinnvoll, wenn zwischen der Adaptereinrichtung und der Wandeinrichtung ein dauerhaftes Dichtmittel eingebracht ist.

Die Klemmeinrichtung kann ein bezüglich der Wandeinrichtung gegenüber von dem Trägerelement der Adaptereinrichtung angeordnetes Konterelement aufweisen, derart, dass die Wandeinrichtung zwischen dem Trägerelement und dem Konterelement einklemmbar ist. Bei der Klemmeinrichtung kann es sich zum Beispiel um eine Schraubeinrichtung handeln, wo mit Hilfe von Schraubverbindungen und zum Beispiel einem Befestigungsblech die Funktionseinrichtung gegen die Wandeinrichtung und die Adaptereinrichtung verspannt wird.

Ebenso ist es möglich, die Klemmeinrichtung als Schnellverschluss auszubilden, der eine vordefinierte Klemmkraft erreicht. Die Klemmkraft in Form einer Vorspannung kann dadurch erreicht werden, dass wenigstens eine der beteiligten Komponenten des Schnellverschlusses, z. B. eine Schraubverbindung, ein Konterelement oder das Befestigungsblech aus einem elastischen Material besteht. Ebenso ist es möglich, eine Federeinrichtung vorzusehen. Die Klemmeinrichtung kann z. B. einen Kniehebel, eine Verriegelungseinrichtung, eine Bajonetteinrichtung oder eine Verdreheinrichtung aufweisen.

Das zu der Klemmeinrichtung gehörende Konterelement kann ebenfalls ringförmig geschlossen ausgebildet sein. Dabei kann das Konterelement Flansche oder Rippen zur Stabilisierung oder besseren Befestigung bzw. Klemmwirkung an der Wandeinrichtung aufweisen.

Als Funktionseinrichtung können sich völlig unterschiedliche Geräte und Einrichtungen eignen. So wurde bereits beispielhaft ein Dachklimagerät als Funktionseinrichtung beschrieben. Ebenso ist es möglich, einen Durchbruch in einer Seitenwand des Fahrzeugs zu nutzen, um ein Klimagerät seitlich anzubringen.

Ebenso ist es möglich, eine Außenantenne, wie zum Beispiel eine Satellitenantenne oder eine DVBT-Antenne an dem Durchbruch zu befestigen. Für diesen Zweck sollte die Antenne einen Fuß aufweisen, der in geeigneter Weise einen Befestigungsflansch im obigen Sinne trägt bzw. aufweist. In gleicher Weise kann ein Windrad oder eine Solaranlage zur Stromgewinnung vorgesehen sein, wobei auch in diesem Fall ein Träger oder Fuß mit einem geeigneten Befestigungsflansch vorgesehen ist, um ihn mit Hilfe der Adaptereinrichtung an oder in dem Durchbruch zu befestigen.

Alternativ zu dem Klimagerät kann auch lediglich eine Gebläseeinrichtung, zum Beispiel ein Deckenventilator vorgesehen sein. Die Gebläseeinrichtung kann Frischluft von Außen in das Innere des Freizeitfahrzeugs blasen oder umgekehrt Luft aus dem Inneren nach außen fördern. Ebenso kann die Gebläseeinrichtung als reiner Deckenventilator ausgebildet sein, der lediglich die Luft im Inneren des Fahrzeugs umwälzt.

Ebenso ist es möglich, eine Heizeinrichtung als Funktionseinrichtung vorzusehen. Auf diese Weise kann z.B. der Stauraum, der für die Heizeinrichtung im Winter benötigt wird, im Sommer durch ein Klimagerät genutzt werden. Die Heizeinrichtung und das Klimagerät werden dann einfach and der Adaptereinrichtung ausgetauscht.

Als Lüftungseinrichtung eignet sich auch ein einfaches Lüftungsgitter, dessen Öffnung veränderbar oder auch unveränderbar sein kann. Zu dem Lüftungsgitter kann z.B. auch eine Abdeckung vorgesehen werden, die bei Bedarf das von der Adaptereinrichtung getragene Lüftungsgitter ersetzt oder abdeckt.

Als Funktionseinrichtung können auch unterschiedliche Sanitäreinrichtungen vorgesehen werden, wie zum Beispiel ein Wasservorratsbehälter zum Bevorraten von Wasser, das in dem Freizeitfahrzeug benötigt wird, oder eine Dusch- oder Toiletteneinrichtung.

Als Funktionseinrichtung sind auch Küchen-, Möbel- oder Wohneinrichtungen vorstellbar, so zum Beispiel ein Kühlschrank, der mit Hilfe der Adaptereinrichtung auf der Innen- oder Außenseite einer Wand des Freizeitfahrzeugs befestigt wird. Wenn der Kühlschrank auf der Außenseite angebracht wird, ist es möglich, die Kühlschranktür nach innen, durch den Durchbruch hindurch zu öffnen. Ebenso könnte eine Kocheinrichtung innen oder außen an der Wand befestigt werden.

Selbstverständlich kann der sichtbare Teil des Durchbruchs in allen Fällen in einer optisch ansprechenden Weise gestaltet werden.

Schließlich kann bei einer Variante auch ein einfaches Wandelement mit geeignetem Befestigungsflansch in den Durchbruch eingesetzt werden, um den Durchbruch zu verschließen, wenn keine andere Funktionseinrichtung vorgesehen ist. Das Wandelement kann somit zum Beispiel eine Dachluke dauerhaft verschließen. Das Wandelement kann jedoch auch als Dachluke ausgebildet sein und dabei entweder dauerhaft verschlossen oder öffenbar ausgestaltet werden. Zudem kann das Wandelement undurchsichtig oder durchsichtig (zum Beispiel gläsern) ausgestaltet werden.

In der Adaptereinrichtung kann wenigstens eine Zwangsbelüftungsöffnung vorgesehen ist, zum Koppeln einer Innenseite der Adaptereinrichtung mit einer Außenseite der Adaptereinrichtung, so dass Luft von der Innenseite zur Außenseite und/oder umgekehrt strömen kann. Durch die Zwangsbelüftungsöffnung kann sichergestellt werden, dass die Innenseite, insbesondere ein von der Wandeinrichtung umschlossener Innenraum, z.B. der Innenraum eines Reisemobils oder eines Caravans, zwangsweise immer in Verbindung mit der Außenseite, z.B. der Umgebung des Reisemobils, steht. Die Zwangsbelüftung des Innenraums ist z.B. dann erforderlich, wenn im Innenraum eine Gasheizung vorgesehen ist. Zum Betrieb der Gasheizung muss es möglich sein, dass Luft aus der Umgebung in den Innenraum gelangen kann.

In der Adaptereinrichtung, z.B. im Trägerelement, können eine oder mehrere Zwangsbelüftungsöffnungen in geeigneter Weise vorgesehen sein. Die Zwangsbelüftungsöffnungen sollten spritzwassergeschützt sein, damit z.B. kein Regenwasser eindringen kann. Ebenso sollte das Eindringen von Schmutz oder Ungeziefer verhindert werden.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine erfindungsgemäße Befestigungsvorrichtung zum Befestigen eines Dachklimageräts auf dem Dach eines Fahrzeugs in Explosionsdarstellung;
- **Fig. 2**: die Befestigungsvorrichtung von Fig. 1 in Zusammenbaudarstellung; und
- **Fig. 3**: in schematischer Darstellung ein Beispiel aus dem Stand der Technik.

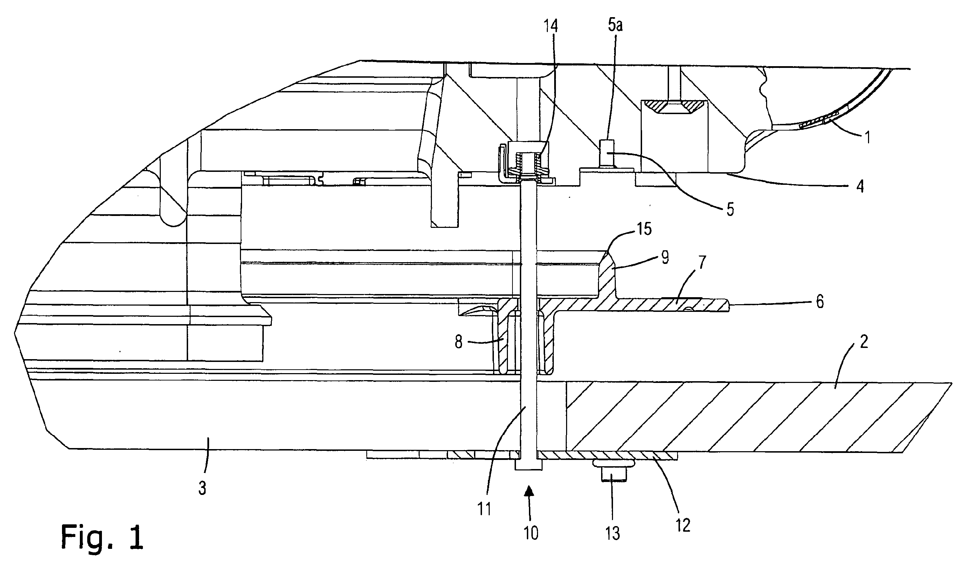

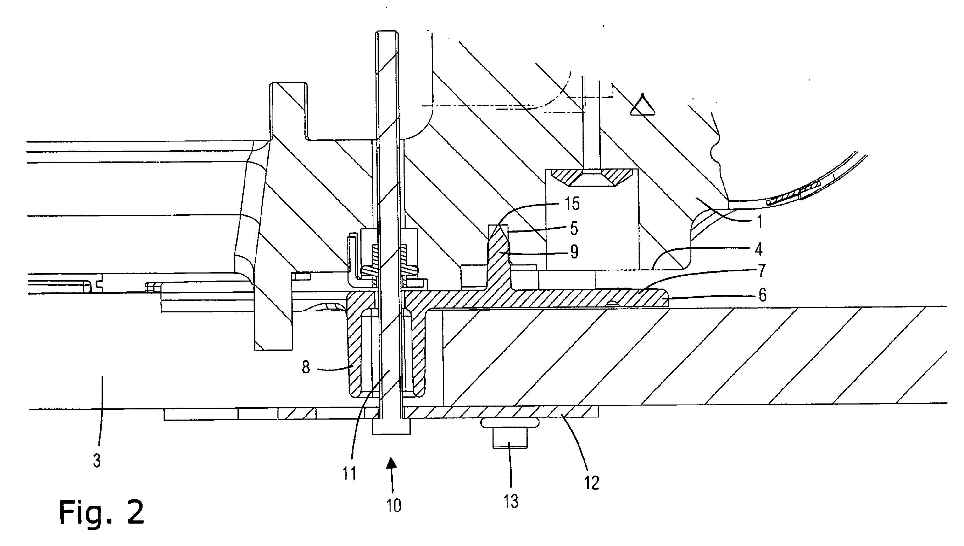

Die Fig. 1 und 2 zeigen ein Beispiel für eine erfindungsgemäße Befestigungsvorrichtung, die zum Befestigen eines Dachklimageräts 1 auf dem Dach 2 eines Freizeitfahrzeugs genutzt wird.

Das Dach 2 weist einen Dachausschnitt in Form eines Durchbruchs 3 auf. Das Dach 2 ist in herkömmlicher Weise aufgebaut und besteht zum Beispiel aus einer Blechkonstruktion mit einem oder zwei Blechen, die in geeigneter Weise umgeformt sind, um die notwendige Stabilität zu erreichen. Zum Beispiel können zwei Blechlagen gebildet werden, zwischen denen ein Dämmstoff zur Wärmedämmung eingebracht ist. Unabhängig davon, wie das Dach 2 aufgebaut ist, kann jedoch davon ausgegangen werden, dass die Stabilität des Dachs 2 durch den Durchbruch 3 beeinträchtigt, also geschwächt ist.

Bei dem Dachklimagerät 1 kann es sich um ein übliches Dachklimagerät handeln, in dem ein entsprechender Kältemittelkreislauf mit Verdampfer, Verflüssiger, Verdichter und entsprechenden Gebläsen vorgesehen ist. Der genaue Aufbau des Dachklimageräts 1 spielt im vorliegenden Fall keine Rolle.

Das Dachklimagerät 1 kann ein Gehäuse aus Metall oder Kunststoff aufweisen. Als besonders vorteilhaft hat es sich erwiesen, wenn das Dachklimagerät zumindest im unteren, dem Dach 2 zugewandten Bereich aus einem geschäumten Kunststoffmaterial, zum Beispiel EPP, besteht. EPP ist sehr leicht, elastisch und andererseits formstabil, robust und witterungsbeständig. Im vorliegenden Beispiel wird davon ausgegangen, dass das Dachklimagerät an seiner Unterseite einen Befestigungsflansch 4 aufweist, der zum Beispiel aus EPP gebildet ist.

In dem Befestigungsflansch 4 ist eine umlaufende Ringnut 5 ausgebildet, die derart konzipiert ist, dass sie um den Durchbruch 3 vollständig umläuft. Beim Stand der Technik kann eine hier nicht dargestellte Runddichtung in die Ringnut 5 eingelegt werden, um die Trennfläche zwischen dem Dachklimagerät 1 und dem Dach 2 dichtend zu verschließen.

Stattdessen ist erfindungsgemäß eine Adaptereinrichtung 6 vorgesehen, die zwischen dem Befestigungsflansch 4 des Dachklimageräts 1 und dem Dach 2 eingesetzt wird.

Die Adaptereinrichtung 6 weist ein in Form einer flachen Platte ausgebildetes Trägerelement 7 auf, von dessen einer, nämlich der unteren Seite sich eine Rippenstruktur als Durchbruchskopplung 8 erstreckt. Im fertig montierten, in Fig. 2 gezeigten Zustand ragt somit die Durchbruchskopplung 8 nach unten in den Durchbruch 3.

Von der gegenüberliegenden anderen, oberen Seite des Trägerelements 7 erstreckt sich vertikal nach oben eine Rippenstruktur als Flanschkopplung 9. Wie Fig. 2 zeigt, dringt die Flanschkopplung 9 in die Ringnut 5 ein, sodass zwischen der Flanschkopplung 9 und dem Befestigungsflansch 4 bzw. dessen Ringnut 5 eine Dichtwirkung erzielt werden kann.

Das Trägerelement 7 der Adaptereinrichtung 6 ist in Form einer flachen Platte ausgebildet, die entsprechend der Außenkontur des Durchbruchs 3 ringförmig umläuft. Die flache Platte kann somit auch als eine Platte verstanden werden, die in der Mitte einen Ausschnitt aufweist, der - aufgrund der innenliegenden Durchbruchskopplung 8 - etwas kleiner ist als der Durchbruch 3.

Die flache Platte kann eine relativ geringe Dicke aufweisen, um die Höhe des Aufbaus auf dem Dach 2 gering zu halten. Die radiale Breite jedoch (in Fig. 1 und 2 die horizontale Breite des Trägerelements 7) ist gegenüber der Dicke des Trägerelements 7 deutlich größer. Da die flache Platte des Trägerelements 7 auf die Außenfläche des Dachs 2 aufgesetzt wird, kann somit eine Stabilisierung des Dachs 2 erfolgen.

Zudem ist es möglich und sinnvoll, zwischen dem Trägerelement 7 und dem Dach 2 ein Dichtmittel dauerhaft einzubringen, sodass eine zuverlässige Dichtwirkung zwischen der Adaptereinrichtung 6 und dem Dach 2 erreicht werden kann. Dabei ist zu beachten, dass die Adaptereinrichtung 6 lediglich einmal auf das Dach 2 und in dem Durchbruch eingesetzt werden, jedoch später nicht mehr demontiert werden muss. Vielmehr kann die Funktionseinrichtung - im gezeigten Beispiel das Dachklimagerät 1 - leicht wieder demontiert und abgenommen werden, wenn sie durch eine andere Funktionseinrichtung ersetzt werden soll. Zum Beispiel ist denkbar, das Dachklimagerät 1 im Winter zu demontieren und durch eine wärmegedämmte Dachplatte bzw. ein geeignetes Wandelement zu ersetzen.

Die Montage des Dachklimageräts 1 auf dem Dach 2 erfolgt mit Hilfe einer als Klemmeinrichtung dienenden Schraubenverbindung 10. Die Schraubenverbindung 10 weist mehrere Schrauben 11 am Umfang des Durchbruchs 3 auf, die eine ringförmige flache Platte 12 oder ähnliche Konterelemente durchdringen, die ihrerseits auf der Innenseite des Dachs 2 mit Schrauben 13 gehalten wird.

Die Schrauben 11 (in den Fig. 1 und 2 ist nur eine Schraube 11 dargestellt) durchdringen die Durchbruchskopplung 8 der Adaptereinrichtung 6 und können jeweils in eine Mutter 14 eingeschraubt werden, die verdreh- und verliersicher in dem Befestigungsflansch 4 des Dachklimageräts 1 vorgesehen ist. Auf diese Weise kann durch Anziehen der Schrauben 11 das Dachklimagerät 1 zuverlässig an dem Durchbruch 3 des Dachs 2 befestigt werden.

Beim Festziehen der Schrauben 11 dringt die Flanschkopplung 9 in die Ringnut 5 ein. An der Oberseite bzw. dem stirnseitigen Ende der Flanschkopplung 9 ist eine Dichtkante 15 vorgesehen, die tief in die elastische Ringnut 5 und deren Nutgrund 5a eindringt, wodurch eine zuverlässige Dichtwirkung erreicht wird. Selbstverständlich kann die Adaptereinrichtung 6 auch in anderer Weise ausgestaltet werden. Die Adaptereinrichtung 6 hat die Aufgabe, an den Durchbruch 3 eine universelle Anschlussmöglichkeit für verschiedenste Funktionseinrichtungen bereitzustellen. Bei entsprechender Gestaltung der Adaptereinrichtung 6 ist es möglich, die Wandung des Dachs 2 zusätzlich zu stabilisieren. An der Adaptereinrichtung 6 ist eine geeignete Anschlussmöglichkeit für die Funktionseinrichtung in Form der Flanschkopplung 9 vorgesehen. Die Flanschkopplung 9 kann in geeigneter Weise standardisiert werden, um verschiedene Funktionseinrichtungen anschließen zu können.

Die Adaptereinrichtung 6 und/oder das Konterelement, z.B. die ringförmige flache Platte 12, können so ausgestaltet sein, dass keine zusätzliche Versteifung oder Hinterfütterung des Durchbruchs 3 erforderlich ist. Das bedeutet, dass die durch die Erzeugung des Durchbruchs 3 bewirkte Schwächung der Festigkeit der Wandeinrichtung (des Dachs 2) durch die Adaptereinrichtung 6 kompensiert werden kann.

Zum Erzeugen einer Anpresskraft und Dichtwirkung zwischen dem Trägerelement 7 und dem Dach 2 kann auch ein Unterdruck bzw. Vakuum z. B. durch Gummi-Saugnäpfe oder zwischen zwei parallel rahmenförmig umlaufenden Gummi-Dichtlippen genutzt werden.

Eines oder mehrere der beschriebenen Bauelemente können aus einem transparenten Material ausgeführt sein, so dass Tageslicht in das Innere des Fahrzeugs eindringen kann. Dabei ist es auch möglich, besondere Strukturen in den betreffenden Bauelementen auszubilden, um das Licht gezielt zu leiten. Ebenso ist es möglich, Beleuchtungselemente, z.B. Leuchtdioden, in die Bauelemente zu integrieren. Die Beleuchtungselemente können auch mit den transparenten Teilen kombiniert werden.

In dem gezeigten Beispiel ist der Durchbruch 3 in dem Dach 2 eines Fahrzeugs ausgebildet. Ebenso ist es möglich, einen derartigen Durchbruch 3 in einer Seitenwand oder auch im Boden des Fahrzeugs zu erzeugen und dort geeignete Funktionseinrichtungen anzubringen. Selbstverständlich können auch mehrere Durchbrüche 3 in den Wandungen eines Fahrzeugs bereitgestellt werden. Die Adaptereinrichtung 6 dient insoweit als Multifunktions-Adapter bzw. als Multifunktions-Rahmen und ist beliebig erweiterbar auf Systeme, die einen Boden-, Wand- oder Dachdurchbruch mit Abdichtung benötigen. Dabei können der jeweilige Durchbruch und die Adaptereinrichtung unterschiedliche, idealerweise standardisierte Größen aufweisen.

Die Funktionseinrichtung kann - wie im gezeigten Beispiel - auf der Außenseite der Wand angebracht werden. Ebenso ist es möglich, die Funktionseinrichtung auf der Innenseite des Dachs zu befestigen. Dann muss die in den Fig. 1 und 2 gezeigte Anordnung lediglich um 180° geklappt werden.

## Patentansprüche

1. Befestigungsvorrichtung zum Befestigen einer Funktionseinrichtung (1) an einem Durchbruch (3) in einer Wandeinrichtung (2) eines Freizeitfahrzeugs, wobei
- die Funktionseinrichtung (1) einen Befestigungsflansch (4) aufweist;
- zwischen dem Befestigungsflansch (4) der Funktionseinrichtung (1) und der Wandeinrichtung (2) eine Adaptereinrichtung (6) vorgesehen ist;
- zwischen der Adaptereinrichtung (6) und einem den Durchbruch (3) umgebenden Teilbereich/Bereich einer Außen- oder Innenfläche der Wandeinrichtung (2) eine Wanddichtfläche ausgebildet ist; wobei
- zwischen der Adaptereinrichtung (6) und dem Befestigungsflansch (4) eine Befestigungsdichtfläche ausgebildet ist, und wobei
die Adaptereinrichtung (6) ein Trägerelement (7), eine Durchbruchskopplung (8) zum Koppeln der Adaptereinrichtung (6) mit der Wandeinrichtung (2) und eine Flanschkopplung (9) zum Koppeln der Adaptereinrichtung (6) mit dem Befestigungsflansch (4) der Funktionseinrichtung (1) aufweist, **dadurch gekennzeichnet, dass** die Flanschkopplung und die Durchbruchskopplung einstückig mit der Adaptereinrichtung (6) ausgebildet sind, wobei die Adaptereinrichtung (6) ringförmig geschlossen ausgebildet ist und das Trägerelement (7) eine ringförmig umlaufende flache Platte aufweist, wobei die Durchbruchskopplung (8) als auf dem Trägerelement (7) umlaufende, sich senkrecht zu dem Trägerelement (7) erstreckende Rippenstruktur ausgebildet ist und die Flanschkopplung (9) als auf dem Trägerelement (7) umlaufende, sich senkrecht zu dem Trägerelement (7) erstreckende Rippenstruktur ausgebildet ist, und wobei die Durchbruchskopplung (8) und die Flanschkopplung (9) auf gegenüberliegenden Seiten des Trägerelements (7) ausgebildet sind.

2. Befestigungsvorrichtung nach Anspruch 1, **dadurch gekennzeichnet, dass** die Adaptereinrichtung (6) ringförmig geschlossen ausgebildet ist und dem Verlauf der Außenkontur des Durchbruchs (3) folgt.

3. Befestigungsvorrichtung nach einem der vorangehenden Ansprüche, **dadurch gekennzeichnet, dass** die Flanschkopplung (9) eine Dichtkante (15) aufweist, die einen Teil der Befestigungsdichtfläche bildet und mit dem Befestigungsflansch (4) der Funktionseinrichtung (1) dichtend zusammenwirkt.

4. Befestigungsvorrichtung nach einem der vorangehenden Ansprüche, **dadurch gekennzeichnet, dass**
- der Befestigungsflansch (4) aus einem elastischen Material besteht;
- die Dichtkante (15) in den Befestigungsflansch (4) eindringt und das elastische Material elastisch verformt.

5. Befestigungsvorrichtung nach einem der vorangehenden Ansprüche, **dadurch gekennzeichnet, dass** das Trägerelement (7) mit der flachen Platte flach an der Wandeinrichtung (2) anliegt.

6. Befestigungsvorrichtung nach einem der vorangehenden Ansprüche, **dadurch gekennzeichnet, dass**
- die flache Platte einen ringförmig geschlossenen Verlauf aufweist, wobei sie durch den ringförmig geschlossenen Verlauf eine einen inneren Ausschnitt in der Platte umschließende Innenkontur und eine Außenkontur aufweist;
- eine radiale Breite der flachen Platte durch die Differenz zwischen der Innenkontur und der Außenkontur definiert ist;
- die radiale Breite der flachen Platte wenigstens doppelt so groß ist wie die Dicke der flachen Platte.

7. Befestigungsvorrichtung nach einem der vorangehenden Ansprüche, **dadurch gekennzeichnet, dass** zwischen der flachen Platte und der Wandeinrichtung (2) ein Dichtmittel vorhanden ist.

8. Befestigungsvorrichtung nach einem der vorangehenden Ansprüche, **dadurch gekennzeichnet, dass** eine Klemmeinrichtung (10) vorgesehen ist, zum Andrücken der Funktionseinrichtung (1) gegen die Adaptereinrichtung (6) und die Wandeinrichtung (2).

9. Befestigungsvorrichtung nach einem der vorangehenden Ansprüche, **dadurch gekennzeichnet, dass** die Klemmeinrichtung (10) ein bezüglich der Wandeinrichtung (2) gegenüber von dem Trägerelement (7) der Adaptereinrichtung (6) angeordnetes Konterelement (12) aufweist, derart, dass die Wandeinrichtung (2) zwischen dem Trägerelement (7) und dem Konterelement (12) einklemmbar ist.

10. Befestigungsvorrichtung nach einem der vorangehenden Ansprüche, **dadurch gekennzeichnet, dass** die Funktionseinrichtung (1) ausgewählt ist aus der Gruppe Klimagerät, Gebläseeinrichtung, Heizeinrichtung, Außenantenne, Sattelitenantenne, Windrad, Solaranlage, Lüftungseinrichtung, Sanitäreinrichtung, Wasservorratsbehälter, Duscheinrichtung, Toiletteneinrichtung, Kühlschrank, Kocheinrichtung, Staubehälter, Möbeleinrichtung oder Wandelement.

11. Befestigungsvorrichtung nach einem der vorangehenden Ansprüche, **dadurch gekennzeichnet, dass** die Wandeinrichtung (2) ausgewählt ist aus der Gruppe Seitenwand, Fahrzeugdach oder Fahrzeugboden des Freizeitfahrzeugs.

12. Befestigungsvorrichtung nach einem der vorangehenden Ansprüche, **dadurch gekennzeichnet, dass** in der Adaptereinrichtung (6) wenigstens eine Zwangsbelüftungsöffnung vorgesehen ist, zum Koppeln einer Innenseite der Adaptereinrichtung (6) mit einer Außenseite der Adaptereinrichtung (6), so dass Luft von der Innenseite zur Außenseite und/oder umgekehrt strömen kann.

## Claims

1. A fastening device for fastening a functional unit (1) to an aperture (3) in a wall means (2) of a recreational vehicle,
- the functional unit (1) including a fastening flange (4);
- an adapter means (6) being provided between the fastening flange (4) of the functional unit (1) and the wall means (2);
- a wall sealing surface being formed between the adapter means (6) and a partial region/region, surrounding the aperture (3), of an outer or inner surface of the wall means (2);
- a fastening sealing surface being formed between the adapter means (6) and the fastening flange (4), and
the adapter means (6) including a carrier member (7), an aperture coupling (8) for coupling the adapter means (6) to the wall means (2), and a flange coupling (9) for coupling the adapter means (6) to the fastening flange (4) of the functional unit (1), **characterized in that** the flange coupling and the aperture coupling are formed in one piece with the adapter means (6), the adapter means (6) being formed to be annularly closed and the carrier member (7) including an annularly surrounding flat plate, the aperture coupling (8) being formed as a rib structure located circumferentially on the carrier member (7) and extending perpendicularly to the carrier member (7), and the flange coupling (9) being formed as a rib structure located circumferentially on the carrier member (7) and extending perpendicularly to the carrier member (7), and the aperture coupling (8) and the flange coupling (9) being formed on opposite sides of the carrier member (7).

2. The fastening device according to claim 1, **characterized in that** the adapter means (6) is formed to be annularly closed and follows the profile of the outer contour of the aperture (3).

3. The fastening device according to either of the preceding claims, **characterized in that** the flange coupling (9) includes a sealing edge (15) which forms part of the fastening sealing surface and sealingly cooperates with the fastening flange (4) of the functional unit (1).

4. The fastening device according to any of the preceding claims, **characterized in that**
- the fastening flange (4) consists of an elastic material;
- the sealing edge (15) penetrates into the fastening flange (4) and elastically deforms the elastic material.

5. The fastening device according to any of the preceding claims, **characterized in that** the carrier member (7) rests flatly against the wall means (2) by the flat plate.

6. The fastening device according to any of the preceding claims, **characterized in that**
- the flat plate has an annularly closed profile, its annularly closed profile resulting **in that** it has an inner contour enclosing an inner cutout in the plate and an outer contour;
- a radial width of the flat plate is defined by the difference between the inner contour and the outer contour;
- the radial width of the flat plate is at least twice as large as the thickness of the flat plate.

7. The fastening device according to any of the preceding claims, **characterized in that** a sealant is present between the flat plate and the wall means (2).

8. The fastening device according to any of the preceding claims, **characterized in that** a clamping means (10) is provided for pressing the functional unit (1) against the adapter means (6) and the wall means (2).

9. The fastening device according to any of the preceding claims, **characterized in that** the clamping means (10) includes a counter element (12) arranged opposite the carrier member (7) of the adapter means (6) with respect to the wall means (2), such that the wall means (2) can be clamped between the carrier member (7) and the counter element (12).

10. The fastening device according to any of the preceding claims, **characterized in that** the functional unit (1) is selected from the group including an air conditioning unit, blower unit, heating installation, external antenna, satellite antenna, wind turbine, solar energy system, ventilation means, sanitary installation, water storage tank, shower unit, toilet unit, refrigerator, cooking unit, stowage container, furniture means, or wall member.

11. The fastening device according to any of the preceding claims, **characterized in that** the wall means (2) is selected from the group including a side wall, vehicle roof or vehicle floor of the recreational vehicle.

12. The fastening device according to any of the preceding claims, **characterized in that** the adapter means (6) has at least one opening for forced ventilation provided therein, for coupling an inside of the adapter means (6) to an outside of the adapter means (6), so that air can flow from the inside to the outside and/or vice versa.

## Revendications

1. Dispositif de fixation pour la fixation d'un appareil fonctionnel (1) sur un passage (3) dans un moyen de paroi (2) d'un véhicule de loisirs,
- l'appareil fonctionnel (1) présentant une bride de fixation (4) ;
- un moyen adaptateur (6) étant prévu entre la bride de fixation (4) de l'appareil fonctionnel (1) et le moyen de paroi (2) ;
- une surface d'étanchéité de paroi étant réalisée entre le moyen adaptateur (6) et une zone partielle/une zone d'une surface extérieure ou intérieure du moyen de paroi (2) entourant le passage (3) ;
- une surface d'étanchéité de fixation étant réalisée entre le moyen adaptateur (6) et la bride de fixation (4), et
le moyen adaptateur (6) présentant un élément support (7), un couplage de passage (8) pour le couplage du moyen adaptateur (6) au moyen de paroi (2), et un couplage de bride (9) pour le couplage du moyen adaptateur (6) à la bride de fixation (4) de l'appareil fonctionnel (1), **caractérisé en ce que** le couplage de bride et le couplage de passage sont réalisés d'un seul tenant avec le moyen adaptateur (6), le moyen adaptateur (6) étant réalisé fermé de manière annulaire, et l'élément support (7) présentant une plaque plane périphérique de manière annulaire, le couplage de passage (8) étant réalisé sous forme de structure à nervures périphérique sur l'élément support (7) qui s'étend perpendiculairement à l'élément support (7), et le couplage de bride (9) étant réalisé sous forme de structure à nervures périphérique sur l'élément support (7) qui s'étend perpendiculairement à l'élément support (7), et le couplage de passage (8) et le couplage de bride (9) étant réalisés sur des faces opposées de l'élément support (7).

2. Dispositif de fixation selon la revendication 1, **caractérisé en ce que** le moyen adaptateur (6) est réalisé fermé de manière annulaire et suit le cours du contour extérieur du passage (3).

3. Dispositif de fixation selon l'une des revendications précédentes, **caractérisé en ce que** le couplage de bride (9) présente une arête d'étanchéité (15) qui forme une partie de la surface d'étanchéité de fixation et qui coopère de manière étanche avec la bride de fixation (4) de l'appareil fonctionnel (1).

4. Dispositif de fixation selon l'une des revendications précédentes, **caractérisé en ce que**
- la bride de fixation (4) est en une matière élastique ;
- l'arête d'étanchéité (15) pénètre dans la bride de fixation (4) et déforme la matière élastique élastiquement.

5. Dispositif de fixation selon l'une des revendications précédentes, **caractérisé en ce que** l'élément support (7) est en appui à plat sur le moyen de paroi (2) par l'intermédiaire de la plaque plane.

6. Dispositif de fixation selon l'une des revendications précédentes, **caractérisé en ce que**
- la plaque plane présente un cours fermé de manière annulaire et présente en raison du cours fermé de manière annulaire un contour intérieur entourant une découpe intérieure dans la plaque, et un contour extérieur ;
- une largeur radiale de la plaque plane est définie par la différence entre le contour intérieur et le contour extérieur ;
- la largeur radiale de la plaque plane est au moins deux fois plus grande que l'épaisseur de la plaque plane.

7. Dispositif de fixation selon l'une des revendications précédentes, **caractérisé en ce qu'**un moyen d'étanchéité est présent entre la plaque plane et le moyen de paroi (2).

8. Dispositif de fixation selon l'une des revendications précédentes, **caractérisé en ce qu'**il est prévu un moyen de serrage (10) pour presser l'appareil fonctionnel (1) contre le moyen adaptateur (6) et le moyen de paroi (2).

9. Dispositif de fixation selon l'une des revendications précédentes, **caractérisé en ce que** le moyen de serrage (10) présente un élément antagoniste (12) agencé en face de l'élément support (7) du moyen adaptateur (6) par rapport au moyen de paroi (2), de sorte que le moyen de paroi (2) est apte à être serré entre le l'élément support (7) et l'élément antagoniste (12).

10. Dispositif de fixation selon l'une des revendications précédentes, **caractérisé en ce que** l'appareil fonctionnel (1) est choisi du groupe constitué d'un appareil de climatisation, d'un moyen de ventilation, d'un moyen de chauffage, d'une antenne extérieure, d'une antenne satellite, d'une éolienne, d'une installation solaire, d'un moyen d'aération, d'une installation sanitaire, d'un réservoir d'eau, d'une installation de douche, d'une installation de toilettes, d'un réfrigérateur, d'une installation de cuisson, d'une caisse de rangement, d'un moyen d'ameublement, ou d'un élément de paroi.

11. Dispositif de fixation selon l'une des revendications précédentes, **caractérisé en ce que** le moyen de paroi (2) est choisi du groupe constitué d'une paroi latérale, d'un toit de véhicule ou d'un plancher de véhicule du véhicule de loisirs.

12. Dispositif de fixation selon l'une des revendications précédentes, **caractérisé en ce qu'**il est prévu dans le moyen adaptateur (6) au moins une ouverture de ventilation forcée pour le couplage d'un côté intérieur du moyen adaptateur (6) à un côté extérieur du moyen adaptateur (6) de sorte que de l'air peut s'écouler depuis le côté intérieur vers le côté extérieur et/ou vice versa.
